# EUROPEAN PATENT APPLICATION

(11) **EP 1 199 156 A1**
(43) Date of publication of application: **24.04.2002**
(21) Application number: 01121706.4
(22) Date of filing: 17.09.2001
(51) Int. Cl.: B32B 5/32, E04B 1/80, E04C 2/20

(54) **Composite components made of sintered expanded resin and method for producing such components**

(30) Priority: 16.10.2000 IT MI002231
(71) Applicant: Alessio S.r.l., 24127 Bergamo (IT)
(72) Inventor: Alessio, Gianni Franco, 24030 Presezzo (Bergamo) (IT)
(74) Representative: Modiano, Guido, Dr.-Ing.

(57) **Abstract**

A composite component (1) made of sintered expanded resin comprising a first layer (2) and a second layer (3) made of sintered expanded resin which are mutually bonded and monolithic and a film (4) which is suitable to be arranged in contact with the upper free surface of said second layer (3) made of sintered expanded resin.

## Description

The present invention relates to composite components made of sintered expanded resin and to the method for producing such components.

It is known that expanded resins in the form of sinterable beads, particularly as regards polystyrene, have been used for years for the most disparate applications. More particularly, among other applications, they are used when good thermal insulation combined with modest component weight is required.

In order to combine the characteristics of light weight and thermal insulation with good mechanical characteristics, in recent years components made of sintered expanded resin, particularly polystyrene, coupled with thermoformed films have been conceived and produced; these components are generally known as sandwiches.

The coupling between the expanded phases and the films generally occurs by thermal bonding, in the particular case in which the two phases are constituted by resins having the same chemical matrix, or by glueing.

The bonding between the two phases gives the components good mechanical characteristics. Moreover, on the sides coated by the film the components have a good resistance to abrasion, wear and penetration which increases as the thickness of the film increases.

These sintered expanded resin components are used mostly when good thermal insulation and good mechanical strength with modest weight have to be ensured. Typical applications are food containers, panels for buildings, and components for refrigeration and conditioning systems.

Several kinds of manufacturing processes are widely used, particularly as regards components for which bonding between the sintered expanded phase and the film occurs by means of an adhesive, and wherein the assembly operation can be performed manually or automatically.

Expanded resins are sintered in conventional molding machines, whose operating principle is to achieve sintering by introducing steam.

As regards instead components for which the expanded phase and the film are joined by thermal bonding, known types of method are substantially of two kinds.

A first kind provides for the thermal bonding of the film simultaneously with the sintering of the expanded resin beads. This method entails placing the film in one of the two half-molds of the machines for molding the expanded resins, then performing the molding cycle, and finally performing the step for unloading the finished parts from the machine.

The molding step is substantially composed of the following sub-steps:
injection of the expanded resin beads into the molding chamber formed by the mating of the half-molds and by the presence of the film;
sintering of the beads and simultaneous thermal bonding thereof with the film by adding steam;
cooling by adding nebulized water to the inner side of the half-molds.

A second known process instead provides for the thermal bonding between the film and the expanded resin after the step of sintering the resin. The steps of the process are:
sintering of the expanded resin portion;
placing the film together with the sintered expanded resin portion;
thermal bonding between the film and the sintered expanded resin portion;
unloading the finished parts from the machine.

The thermal bonding step substantially comprises the following sub-steps:
addition of steam (which provides the heat required for thermal bonding);
cooling by adding nebulized water on the inner side of the half-molds.

From the functional point of view, known types of molding machine are substantially composed of two half-molds, one whereof is fixed and the other is movable, in order to allow the half-molds to be opened and closed. The half-molds are substantially composed of a hollow structure, known as bell, which comprises a contoured wall which determines the shape of the workpieces and walls which have a merely structural function. The contoured wall has multiple holes which allow the passage of steam and air between the inside of the bell and the molding chamber formed by the mating of the two half-molds.

The above described sintered expanded resin components, however, suffer drawbacks.

A single type of expanded resin is in fact very often unable to meet simultaneously and optimally the various requirements (thermal insulation, mechanical characteristics, resistance to abrasion and penetration, light weight, et cetera) that are typical of the most common applications.

For example, polystyrene has a minimum of thermal conductivity (accordingly a maximum of effectiveness in terms of thermal insulation) at a density of around 30-35 g/l. On the other hand, at these densities polystyrene has poor mechanical characteristics and yields very easily.

Moreover, in order to meet certain mechanical and technological characteristics, such as tensile and compression resistance, resistance to penetration and abrasion, other mechanical characteristics, such as resilience and elasticity, are compromised.

The aim of the present invention is to provide composite components made of sintered expanded resin in which the characteristics of thermal insulation and light weight of the components are combined with good mechanical characteristics and abrasion-resistance characteristics.

Within this aim, an object of the present invention is to provide components made of sintered expanded resin which have good elasticity combined with good mechanical and technological characteristics in terms of resistance to compression, to abrasion and to penetration.

Another object of the present invention is to provide composite components made of sintered expanded resin which are particularly suitable for use as panels for buildings, insulating panels for applications in underfloor cooling systems and components for heating and conditioning systems.

Still another object of the present invention is to provide a method for manufacturing composite components made of sintered expanded resin.

A further object of the present invention is to provide composite components made of sintered expanded resin and a corresponding production process which are highly reliable, relatively easy to provide and at competitive costs.

This aim and these and other objects which will become better apparent hereinafter are achieved by a composite component made of sintered expanded resin, characterized in that it comprises a first layer and a second layer made of sintered expanded resin which are mutually bonded and monolithic and a film which is suitable to be arranged in contact with the upper free surface of said second layer of sintered expanded resin.

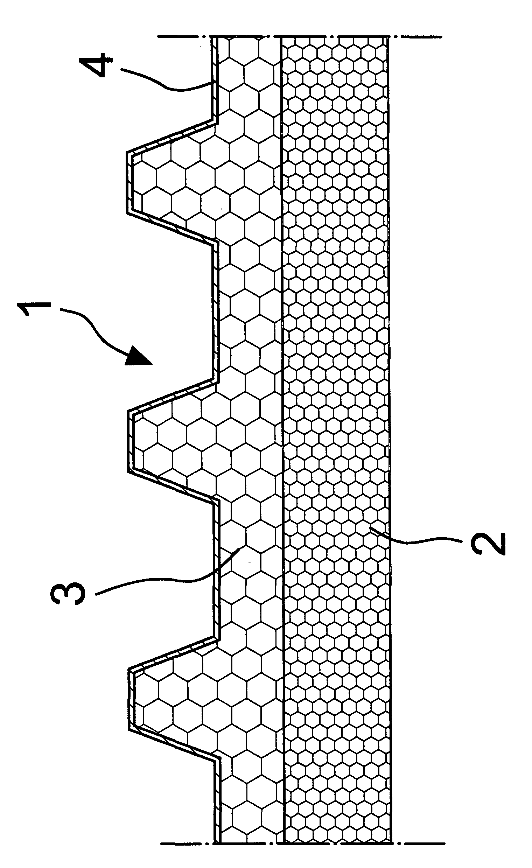

Further characteristics and advantages of the invention will become better apparent from the description of preferred but not exclusive embodiments of the composite component according to the invention, illustrated only by way of non-limitative example in the accompanying drawings, wherein the only figure is a cross-sectional view of a composite component according to the present invention.

With reference to the only figure, the composite component according to the present invention, generally designated by the reference numeral 1, comprises a first layer made of sintered expanded resin 2 and a second layer made of sintered expanded resin 3 which is bonded to the first layer by thermal bonding. A surface film 4 is arranged on the second layer 3 of sintered expanded resin.

The first and second layers 2 and 3 of sintered expanded resin can be constituted by the same expanded resin at different densities or by two different expanded resins having the same chemical base.

By way of example, one layer can be made of polypropylene and the other layer can be made of polypropylene and polyethylene copolymer.

The expanded resins that are particularly suitable for providing the composite component according to the invention are polystyrene, polypropylene, polyethylene, and copolymers based on said polymers.

The film 4 can be constituted by the same resin that constitutes, in the expanded phase, the layers 2 and 3 or can be constituted by any material, so long as it comprises, at the face designed to be bonded to the second layer made of expanded resin 3, an appropriate primer which allows its thermal bonding with the second layer made of expanded resin 3.

Having two layers of foamed resin 2 and 3 with highly diversified characteristics allows to give the composite component 1 mechanical, technological and physical properties which cannot be combined in the case of simple sandwiches having a single layer of expanded resin.

Essentially, the composite component according to the invention is constituted by a double layer of sintered expanded resin with a surface film in order to give an optimum surface finish.

The composite component 1 made of sintered expanded resin can be obtained by carrying out the process described hereinafter.

Using a conventional molding machine provided with two half-molds, the following steps are performed:
first of all, the first layer of sintered expanded resin 2 is placed in one of the two half-molds of the molding machine and then the two half-molds are closed.

A cycle is then performed for sintering the second layer 3 made of expanded resin while the second layer is thermally bonded with the first layer.

The resulting partial composite component is then extracted from one of the two half-molds and the film 4 is placed on the unoccupied half-mold; then the two half-molds are closed.

This is followed by a cycle for thermal bonding of the film 4 with the adjacent layer made of foamed resin 3.

Even if the upper surface of the second layer 3 is not flat, the film 4 can be flat and can be subjected to final formation simultaneously with its thermal bonding with an adjacent layer 3 made of expanded resin, by the action of the heat supplied by the steam, and of the closure pressure of the half-molds.

If expanded polystyrene is used, it is possible to provide the first layer of expanded resin 2 with a high density (for example 70-80 g/l) in order to ensure good mechanical and technological characteristics, and to provide the second layer 3 with a density which is ideal for thermal insulation, for example 30-35 g/l. In this case, thanks to the composite component according to the invention, a structure is obtained having high performance both in terms of thermal insulation and in terms of mechanical and technological characteristics.

Moreover, in many applications it can be necessary to provide composite components with good elasticity characteristics together with good characteristics in terms of resistance to abrasion and to penetration.

In such cases, it is possible to provide the layer 3 by using an expanded resin constituted by a polymer or copolymer having good elastic characteristics and the first layer 2 by using a more rigid polymer or copolymer having good characteristics of resistance to abrasion and to penetration.

For example, the second layer 3 can be constituted by low-density expanded polystyrene or by an expanded copolymer of polystyrene and polybutadiene, while the layer 2 can be constituted by high-density expanded polystyrene or by an expanded copolymer of polystyrene and polyphenylene oxide.

Moreover, for example, the layer 3 can be constituted by low-density expanded polypropylene or by an expanded copolymer of polypropylene and polyethylene, while the layer 2 can be constituted by high-density expanded polypropylene.

The most typical applications of composite components according to the invention are, as mentioned, panels for buildings, insulating panels for applications in underfloor cooling systems, components for heating and condition systems and the like.

The composite component thus conceived is susceptible of numerous modifications and variations, all of which are within the scope of the appended claims; all the details may further be replaced with other technically equivalent elements.

In practice, the materials used, so long as they are compatible with the specific use, as well as the contingent shapes and dimensions, may be any according to requirements and to the state of the art.

The disclosures in Italian Patent Application No. MI2000A002231 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A composite component made of sintered expanded resin, **characterized in that** it comprises a first layer (2) and a second layer (3) made of sintered expanded resin which are mutually bonded and monolithic and a film (4) which is adapted to be arranged in contact with the upper free surface of said second layer (3) made of sintered expanded resin.

2. The composite component according to claim 1, **characterized in that** said first (2) and second (3) layers of sintered expanded resin are made of sintered expanded resin having different densities.

3. The composite component according to claim 1, **characterized in that** said first (2) and second layers (3) of sintered expanded resin and said film (4) are joined to each other by thermal bonding.

4. The composite component according to claim 1, **characterized in that** said first (2) and second (3) layers of sintered expanded resin are composed of copolymers having the same chemical base.

5. The composite component according to claim 1, **characterized in that** said first (2) and second (3) layers of sintered expanded resin have different elastic characteristics.

6. The composite component according to claim 1, **characterized in that** the expanded resin that constitutes said first (2) and second (3) layers of expanded resin is selected from a group comprising: expanded polystyrene, expanded polypropylene, expanded polyethylene or a copolymer based on said expanded copolymer or said expanded polypropylene or said expanded polyethylene.

7. The composite component according to claim 1, **characterized in that** said film (4) is made by using the same resin as said first (2) and second (3) layers.

8. The composite component according to claim 1, **characterized in that** it comprises, on a surface of said film (4) which is suitable to be directed toward said second layer (3) of sintered expanded resin, a primer for adhesion thereto.

9. A method for manufacturing composite components according to one or more of the preceding claims, **characterized in that** it comprises the steps of:
arranging a first layer of sintered expanded resin in a half-mold of a pair of half-molds of a sintering press;
closing said half-molds;
sintering a second layer of expanded resin and thermally bonding said second layer with said first layer;
removing from one of said half-molds the resulting partial composite component;
placing a film on the unoccupied half-mold;
closing said half mold; and
thermally bonding said film with said second layer made of expanded resin arranged adjacent thereto.

10. The method according to claim 9, **characterized in that** said film is provided flat and is formed simultaneously with the thermal bonding of said film with the second layer made of sintered expanded resin.
